# EUROPÄISCHE PATENTSCHRIFT

(11) **EP 1 811 006 B1**
(45) Veröffentlichungstag und Bekanntmachung des Hinweises auf die Patenterteilung: **04.03.2009**
(21) Anmeldenummer: 06100723.3
(22) Anmeldetag: 23.01.2006
(51) Int. Cl.: C09J 175/04, C09J 175/06, C09J 175/08, C08G 18/10, C08G 18/12, C08G 18/20, C09J 11/00

(54) **Klebstoffsystem**
Adhesive system
Système adhésif

(43) Veröffentlichungstag der Anmeldung: 25.07.2007
(73) Patentinhaber: Purbond AG, 6203 Sempach Station (CH)
(72) Erfinder: Gabriel, Joseph, 6018, Buttisholz (CH)
(74) Vertreter: Hepp, Dieter

(56) Entgegenhaltungen:
- EP-A- 0 080 668
- CA-A1- 2 279 146
- US-A- 5 603 798
- US-A- 5 672 652
- US-A- 5 852 103

## Beschreibung

Die Erfindung betrifft ein Klebstoffsystem, umfassend insbesondere ein einkomponentiges, feuchtigkeitshärtendes PolyurethanKlebstoffsystem, und eine separat bereitgestellte und beizumischende Modifizierungskomponente, wobei die Modifizierungsmischung einen Katalysator umfasst. Die Erfindung betrifft weiter ein Verfahren zum Bereitstellen einer individuell und vor Ort an die Substrate und die Verarbeitungsbedingungen angepassten Klebstoffzusammensetzung, ein Verfahren zum Verbinden von Substraten sowie die Verwendung einer separat bereitgestellten Modifizierungsmischung, wobei die Modifizierungskomponente einen Katalysator umfasst.

Die Erfindung betrifft insbesondere Klebstoffsysteme für den konstruktiven Holzbau. An Klebeverbindungen im konstruktiven Holzbau werden hohe Anforderungen gestellt. Diese werden beispielsweise in EN 302 definiert. Neben den wegen der Gesundheitsgefahr zunehmend in der Kritik stehenden, wässrigen formaldehydbasierten Klebstoffzusammensetzungen erfüllen derzeit insbesondere einkomponentige, nicht-wässrige, feuchtereaktive Polyurethan-Klebstoffzusammensetzungen diese Anforderungen. Einkomponentige polyurethanbasierte Klebstoffzusammensetzungen sind i.d.R. vorreagierte Isocyanatgruppen-terminierte Prepolymere, die aus Polyolkomponenten und Polyisocyanatkomponenten aufgebaut sind. Diese Produkte sind also inhärent zur Ausbildung eines linearen oder auch verzweigten Polyurethan-polyharnstoffnetzwerks befähigt, sobald Feuchtigkeit hinzutritt. In der Praxis haben sich mit derartigen einkomponentigen polyurethanbasierten Klebstoffzusammensetzungen bewirkte Verbunde hervorragend bewährt. Nachteilig ist jedoch bei so unflexibel formulierten Klebstoffen die Einhaltung der für gegebene Substrate und jeweils herrschende Verarbeitungsbedingungen (Luftfeuchtigkeit, Temperatur, etc.) feststehende, offene Zeit/Presszeit der Klebstoffzusammensetzung. Unter "offener Zeit" wird hier und im folgenden die Zeit verstanden, innerhalb derer die polyurethanbasierte, einkomponentige Klebstoffzusammensetzung fachgerecht verarbeitbar ist, nachdem sie der Luftfeuchtigkeit, bzw. Substratfeuchte ausgesetzt wurde. Die "Presszeit" ist jene Zeitspanne, die der Klebstoff benötigt, um eine genügend hohe Anfangsfestigkeit des Verbundes zu erreichen, so dass die Pressen oder Klammern gelöst und die Teile weiter verarbeitet oder transportiert werden können. Es ist derzeit nicht bekannt, mit einkomponentigen polyurethanbasierten Klebstoffzusammensetzungen die offene Zeit/Presszeit individuell an die jeweiligen Substrate und Verarbeitungsbedingungen anzupassen. So können in der Praxis insbesondere mit ein und derselben Klebstoffzusammensetzung in Abhängigkeit von der jeweiligen Umgebungstemperatur signifikant unterschiedliche offene Zeiten resultieren ("Sommer-Wintereffekt"), die manche Zusammensetzungen saisonabhängig unbrauchbar werden lassen. Der Fachmann muss derzeit, um optimierte Verarbeitungsbedingungen einhalten zu können, eine Vielzahl von Klebstoffzusammensetzungen bereithalten, um auf unterschiedliche Substrate, insbesondere auch unterschiedliche Holzarten mit unterschiedlichen Porositäten, Holzfeuchten o. dgl., und unterschiedliche Verarbeitungsbedingungen reagieren zu können. Ganz besonders problematisch ist die Bereitstellung von Klebstoffen mit extrem kurzer offener Zeit, da diese auch weniger lagerstabil sind, also beim Transport unter warmen bis heißen Bedingungen zum Anstieg der Viskosität und im Extremfall zum vollständigen Gelieren neigen und so den fachgerechten Einsatz erschweren bzw. unmöglich machen.
Aus dem Dokument CA 2,279,146 ist es bekannt, einer einkomponentigen, feuchtigkeitshärtenden, polyurethanbasierten Klebstoffzusammensetzung für die Verklebung von Holz den Katalysator Dimorpholinodiethylether (DMDEE) zuzugeben; mit steigendem Gehalt an DMDEE wird eine Verbesserung der erzielbaren Bindungsstärke, bezogen auf eine bestimmte Presszeit, beschrieben. Das DMDEE wird jedoch bereits bei der Konfektionierung mit der Klebstoffzusammensetzung vermischt. Nachteilig hierbei ist, dass insbesondere bei längerer Lagerung der Klebstoff in Anwesenheit des Katalysators, wie hier das DMDEE, unstabil ist und ggf. eine zumindest teilweise, vorzeitige Vernetzung der Klebstoffzusammensetzung eintreten kann.

Es ist daher eine Aufgabe der Erfindung, Klebstoffzusammensetzungen bereitzustellen, welche die Nachteile des bekannten, insbesondere auch die eingeschränkte Lagerfähigkeit, überwindet, und welche insbesondere in wirtschaftlicher und einfacher Weise die Verbindung von unterschiedlichen Substraten und bei unterschiedlichen Verarbeitungsbedingungen ermöglichen.

Diese Aufgabe wird erfindungsgemäss gelöst mit einem Klebstoffsystem, einem Verfahren zum Bereitstellen einer individuell an die Substrate und die Verarbeitungsbedingungen angepassten Klebstoffzusammensetzung, einem Verfahren zum Verbinden von Substraten sowie der Verwendung einer separat bereitgestellten Modifizierungskomponente gemäss den unabhängigen Patentansprüchen.

Ein erfindungsgemässes Klebstoffsystem umfasst als separate Komponenten:
(A) eine mit Feuchtigkeit reaktionsfähige Mischung, umfassend ein Prepolymer, aufgebaut aus mindestens einem Polyol und mindestens einem Polyisocyanat; sowie
(B) eine Modifizierungskomponente, umfassend mindestens einen Polymerisationskatalysator, wobei als Komponente (B) verschiedene Katalysatoren als Alternativen und/oder verschiedene Katalysatormengen als Alternativen und/oder verschiedenen Rheologiemodifikatoren als Alternativen und/oder verschiedene Rheologiemodifikatormengen als Alternativen enthalten sind.
Das Mischungsverhältnis von (A) zu (B) soll vorzugsweise, abhängig von den jeweiligen Verarbeitungsbedingungen und/oder gewünschten offenen Zeiten zwischen 99 zu 1 und 80 zu 20 gewählt werden können.

Unter einem "Prepolymer" werden hierbei Moleküle gemäss Definition in Römpp Chemie Lexikon, Georg Thieme Verlag, 9. Auflage 1992, verstanden. Die Prepolymere sind hierbei vorzugsweise derart beschaffen bzw. erhältlich, dass lineare und/oder verzweigte Hydroxylgruppen enthaltende Polyester- und/oder Polyetherpolyole mit Molekulargewichten von 300 bis 6000 g/Mol, vorzugsweise 1000 bis 5000 g/Mol mit einem Überschuss von Polyisocyanaten zu NCOendständigen Addukten umgesetzt werden. Pro Hydroxylgruppe im Polyol sollen ein Überschuss von 2 bis 20, vorzugsweise 5 bis 15 Isocyanatgruppen eingesetzt werden. Die Obergrenze des Molekulargewichts des Prepolymers wird insbesondere dadurch definiert, dass es noch derart fliessfähig sein muss, dass die Benetzung einer zu verklebenden Oberfläche erreicht werden kann.

Unter einem "System" (kit-of-parts), insbesondere einem "Klebstoffsystem", wird hier und im folgenden eine Kombination von Komponenten verstanden, welche - zur Wechselwirkung, insbesondere Mischung miteinander bestimmt - bis zum Gebrauchszeitpunkt getrennt vorliegen. Der Gebrauchszeitpunkt ist hierbei über die bestimmungsgemässe Verarbeitung der Klebstoffzusammensetzung definiert. Insbesondere handelt es sich um in einer gemeinsamen Umverpackung bereitgestellte und/oder bestellbare und/oder gelieferte Komponenten. Die Bestimmung zur Wechselwirkung, insbesondere Mischung der Komponenten des Systems miteinander kann hierbei insbesondere auch durch bspw. aufgedruckte oder anderweitig bereitgestellte Begleitinformationen zum Ausdruck kommen.

Komponente (A) des erfindungsgemässen Klebstoffsystems stellt eine aus sich selbst heraus reaktionsfähige, einkomponentige, feuchtigkeitsreaktive Polyurethan-Klebstoffzusammensetzung dar.

Durch die ergänzende Bereitstellung der Komponente (B), nämlich einer Modifizierungskomponente, welcher die Reaktion der Komponente (A) mit Feuchtigkeit beschleunigt und insbesondere andere Eigenschaften des Klebstoffs wie z.B. die Rheologie beeinflusst, ist eine individuelle Anpassbarkeit der Klebstoffzusammensetzung an verschiedene Substrate und/oder verschiedene Verarbeitungsbedingungen ermöglicht. Zur Beeinflussung der Rheologie können dem Fachmann bekannte Rheologiemodifikatoren und/oder Thixotropiermittel in der Komponente (B) verwendet werden. Bevorzugte Rheologie-Modifikatoren sind pyrogene Kieselsäure, organische und anorganische, insbesondere faserförmige Füllstoffe, Polyharnstoffe, Polyurethan-Verdicker, Polyacrylat-Verdicker, Cellulose-Verdicker, Silikate, und Polyethylenoxid. Der Anwender kann vor Ort über die Dosierung der Komponente (B) die Eigenschaften der resultierenden Klebstoffzusammensetzungen bestimmen. Insbesondere ist es hierbei möglich, dass in Abhängigkeit von der gewünschten offenen Zeit/Presszeit der resultierenden Klebstoffzusammensetzung verschiedene Mengen der Komponente (B) zugegeben werden können. Beispielsweise ist es jedoch auch möglich, dass die Komponente (B) in für den Anwender stets gleich erscheinenden Mengen zugegeben werden kann, wobei diese Komponente (B) dann jedoch - in Abhängigkeit von der gewünschten offenen Zeit - mit verschiedenen Anteilen an nicht katalytisch aktivem Material gestreckt und/oder mit einem oder mehreren Katalysatoren anderer Aktivität gemischt ist. Der Anwender kann somit wählen zwischen einer Komponente (B) für eine offene Zeit von z.B. 20 Minuten, einer anderen Komponente (B) für eine offene Zeit von z.B. 40 Minuten, etc., wobei er stets die gleich Menge zur Komponente (A) zugeben kann. Dies minimiert menschliche Fehlerquellen bei der Anwendung des erfindungsgemässen Klebstoffsystems. Insbesondere können hierbei auch die Komponenten vorportioniert bereitgestellt werden, wodurch die Handhabbarkeit des Systems nochmals erleichtert ist, da das individuelle Abwiegen als Fehlerquelle ausgeschlossen ist.

Durch die individuelle Anpassbarkeit der Klebstoffzusammensetzung an verschiedene Substrate und verschiedenste Verarbeitungsbedingungen lediglich über verschiedene Gehalte an Komponente (B) kann auf eine einzige Komponente (A) zurückgegriffen werden. Dies verbessert die Wirtschaftlichkeit, sowohl auf Seiten des Herstellers/Vertreibers als auch auf Seiten des Anwenders, enorm: Müssen im Stand der Technik eine Vielzahl von vorkonfektionierten Klebstoffzusammensetzungen bereitgehalten werden, so erlaubt das erfindungsgemässe Klebstoffsystem die Bereitstellung einer einzigen Komponente (A) unter Abdeckung einer sehr grossen Vielzahl von denkbaren Anwendungsfällen. Auch für den Verarbeiter ist die individuelle Anpassbarkeit von grossem Vorteil, da er wechselnde Anforderungen an die Klebstoffzusammensetzung mit einem einzigen Klebstoffsystem bedienen kann.

Komponente (A) des erfingsgemäßen Klebstoffsystems umfasst vorzugsweise Isocyanatgruppen-terminierte Prepolymere, die aus mindestens einem Polyisocyanat und mindestens einem Polyol aufgebaut sind. Der für die weitere Reaktion, beispielsweise mit Feuchtigkeit zur Verfügung stehende Isocyanatgruppen-(NCO)-Gehalt liegt insbesondere zwischen 10 bis 20 Gew.-%, vorzugsweise 12 bis 18 Gew.-% und ganz besonders bevorzugt zwischen 14 und 17 Gew.-%.

In besonders bevorzugten Ausführungsformen ist ein aromatisches Polyisocyanat (oder auch verschiedene aromatische Polyisocyanate) eine wesentliche Aufbaukomponente der Komponente (A). Geeignete aromatische Polyisocyanate sind dem Fachmann der Polyurethan-Chemie bekannt und können in Routineversuchen ausgewählt und/oder angepasst und gemischt werden. Das aromatische Polyisocyanat ist vorzugsweise ausgewählt aus der Gruppe bestehend aus Diphenylmethan-Diisocyanaten (MDI) und seinen höheren Homologen (PMDI), und Toluol-Diisocyanaten sowie Mischungen davon. Besonders bevorzugt wird als aromatisches Polyisocyant 4,4'- oder 2,4'-Methylendi(phenylisocyanat), insbesondere auch Gemische davon (z.B. Desmodur 44 M oder Desmodur 2460 M der Bayer AG), 2,4-Toluoldiisocyanat, 2,6-Toluoldiisocyanat oder Mischungen davon eingesetzt. Toluoldiisocyanat ist als reines 2,4-Isomer kommerziell erhältlich, wird jedoch üblicherweise als Isomerenmischung (2,4/2,6) bspw. im Verhältnis 80/20 oder 65/35 vertrieben und eingesetzt. Reines 4,4'-und/oder 2,4-Methylendi(phenylisocyanat) besitzt eine Isocyanat-Funktionalität von 2, wird jedoch oft in Mischungen mit höherfunktionalen Oligomeren (PMDI) eingesetzt; hierdurch wird ein höherer und/oder variabler Vernetzungsgrad ermöglicht. Der Zusatz von höherfunktionalen Isocyanaten und/oder der ausschliessliche Einsatz von Polyisocyanaten ist selbstverständlich auch mit anderen Isocyanaten als Methylen-di(phenylisocyanat) möglich. Im Rahmen der Erfindung ist es besonders bevorzugt, dass die mittlere Isocyanat-Funktionalität des Polyisocyanats (aromatisch und/oder aliphatisch) im Bereich von 2.0 bis 3.0 liegt, besonders bevorzugt im Bereich von 2.2 bis 2.8. Derartige Polyisocyanat-Mischungen sind kommerziell erhältlich, bspw. von der Bayer AG unter dem Namen Desmodur VK 10 oder Desmodur VKS 20.

In weiteren Ausführungsformen der Erfindung ist ein aliphatisches Polyisocyanat der Komponente (A) beigefügt. Geeignete aliphatische Polyisocyanate sind dem Fachmann der PolyurethanChemie ebenfalls bekannt und können in Routineversuchen ausgewählt und/oder angepasst und gemischt werden. Bei dem aliphatischen Polyisocyanat handelt es sich vorzugsweise um Polyisocyanate und deren Derivate auf der Basis von Isophoron-Diisocyanat, Hexamethylen-Diisocyanat, bis(4-Isocyanatocyclohexyl)methan oder Mischungen davon. Aliphatische Polyisocyanate haben gegenüber aromatischen Polyisocyanaten den Vorteil der grösseren UV-Stabilität. Derartige aliphatische Polyisocyanate bzw. Mischungen sind kommerziell erhältlich, bspw. von Bayer AG unter dem Namen Desmodur H, Desmodur I oder Desmodur W; ebenso sind auch modifizierte Polyisocyanate, wie beispielsweise das Trimerisat von Hexamethylendiisocyanat wie z.B Desmodur N 3300 der Bayer AG einsetzbar.

Im Rahmen der Erfindung können aliphatische und aromatische Polyisocyanate sowohl alternativ als auch in Mischungen gemeinsam in Komponente (A) des Klebstoffsystems eingesetzt werden. Der Anteil der Isocyanat-Komponente an der Klebstoffzusammensetzung liegt typischerweise im Bereich von etwa 40 Gew.% bis etwa 75 Gew.%, vorzugsweise im Bereich von etwa 50 Gew.% bis etwa 70 Gew.%, bezogen auf das Gesamtgewicht aller Edukte der Klebstoffkomponente (A).

In weiteren Ausführungsformen der Erfindung ist mindestens ein Polyester-Polyol und/oder mindestens ein Polyether-Polyol der Komponente (A) beigefügt. Polyether-Polyole und Polyester-Polyole können hierbei insbesondere linear oder leicht verweigt sein. Produkte dieser Art sind dem Fachmann bekannt.

Unter der Vielzahl der Produkte sind insbesondere die Polyetherpolyole zu nennen, die durch Basen katalysierte Addition von Propylenoxid und/oder Ethylenoxid an Startermoleküle, wie beispielsweise Ethylenglykol, Propylenglykol, Glyzerin, Sorbit oder Triisopropanolamin oder Mischungen davon herstellbar sind. Die Funktionalität gegenüber Isocyanaten wird weitestgehend durch die Funktionaltät des Startermoleküls bestimmt. Insbesondere durch die (Mit)Verwendung von höherfunktionellen Startermolekülen wie Glyzerin, Trimethylolpropan oder Ethylendiamin werden höherfunktionelle Polyetherpolyole erhalten. Typische Polyetherpolyole sind kommerziell erhältlich, bspw. von der Bayer AG unter den Namen Desmophen 2060 BD (lineares Polypropylenetherglykol mit einem mittleren Molekulargewicht von ca. 2000 g/Mol und einer Hydroxylzahl von 56 mg KOH/g), Desmophen 5034 BT (Polypropylen-ethylenetherpolyol auf Glyzerin gestartet mit einem mittleren Molekulargewicht von 4800 g/Mol, einer Funktionalität von ca. 3 und einer Hydroxylzahl von ca. 35 mg KOH/g) oder Desmophen 4059 EV (auf Ethylendiamin gestartetes Polypropylentherpolyol mit einem mittleren Molekulargewicht von ca. 4000 g/Mol, einer mittleren Funktionalität von ca. 4 und einer Hydroxylzahl von ca. 59 mg KOH/g). Durch säurekatalysierte Polymersiation von Tetrahydrofuran werden Hydroxylgruppen terminierte Polytetramethylenetherglykole erhalten, z.B Terathane 2000 (Polytetramethylenetherglykol mit einem mittleren Molekulargewicht von ca. 2000 g/Mol und einer Hydroxylzahl von ca. 56 mg KOH/g) der BASF, die wegen des etwas hydrophoberen Charakters oft von Vorteil sind.

Geeignete Polyesterpolyole werden typischerweise erhalten durch Reaktion von beispielsweise Adipinsäure oder o-Phthalsäure mit Diolen und Triolen. Geeignete Diole hierfür sind bspw. Neopentylglykol, Diethylenglykol, 2-Methyl-1,3-propandiol, 2,3-Methylbutandiol, 1,2-Propylenglykol, und Mischungen hiervon. Die jeweils geeigneten Polyesterpolyole können vom Fachmann in Routineversuchen ermittelt und bereitgestellt werden. Typische Polyesterpolyole sind zudem kommerziell erhältlich, bspw. von der Bayer AG unter dem Namen Desmophen 1652 oder Baycoll AD 1115. Weitere Polesterpolyole sind Fettsäurebasierte Polyole, wie beispielsweise Rizinusöl und dessen Derivate. Einsetzbar sind selbstverständlich auch z.B. mit Füllstoffen modifizierte, sedimentationsstabile Polyetherpoloyle, wie sie beispielsweise unter den Namen Desmophen 5028 BT oder Desmophen 5027 GT der Bayer AG im Handel sind. Bei diesen Produkten handelt es sich um sedimentationsstabile Dispersionen von 20 Gew.-% Polyhydrazodicarbonsäureamiden, bzw. Copolymerisaten von Styrol und Acrylnitril in trifunktionellen Polypropylen(ethylen)etherpolyolen als kontinuierlicher Phase. Bei Einsatz dieser Produkte kann auf den Extraschritt der Füllstoffzugabe zum Prepolymeren ganz oder teilweise verzichtet werden.

In besonders bevorzugten Ausführungsformen weist das Polyester-Polyol und/oder das Polyether-Polyol ein mittleres Molekulargewicht im Bereich von etwa 300 g/mol bis etwa 6000 g/mol, vorzugsweise 1000 g/Mol bis 5000 g/Mol auf; und/oder die mittlere Hydroxylzahl des Polyester-Polyols und/oder des Polyether-Polyols beträgt etwa 20 bis 250 mg KOH/g, vorzugsweise 25 bis 180 mg KOH/g.

Im Rahmen der Erfindung können Polyester-Polyole und Polyether-Polyole sowohl alternativ als auch in Mischungen gemeinsam in Komponente (A) des Klebstoffsystems eingesetzt werden. Der Anteil der Polyol-Komponente an der Klebstoffzusammensetzung liegt typischerweise im Bereich von etwa 25 Gew.% bis etwa 50 Gew.%, vorzugsweise im Bereich von etwa 30 Gew.% bis etwa 45 Gew.%, bezogen auf das Gesamtgewicht aller Edukte der Komponente (A).

Im Rahmen der Erfindung ist es besonders vorteilhaft, wenn die Komponente (A) einen oder mehrere Zusatzstoffe als Formulierunghilfsmittel enthält, insbesondere ausgewählt aus der Gruppe bestehend aus Weichmachern, oberflächenaktiven Stoffen, Flammschutzmitteln, Füllstoffen, Farbstoffen, Pigmenten, Lösungsmitteln und Entschäumern, Rheologiemodifikatoren, Thixotropiermitteln, Stabilisatoren und Klebrigmachern. Derartige Zusatzstoffe sind als solche im Stand der Technik bekannt und im Rahmen der Erfindung derart auszuwählen, dass die Kohäsion der resultierenden Klebstoffzusammensetzung und die Adhäsion zu dem Substrat, insbesondere Holz, ausgewogen ist. Die Qualität einer mit dem erfindungsgemässen Klebstoffsystem bewirkten Verbindung ist insbesondere auch von der geeigneten Auswahl der Zusatzstoffe, welche in Routineversuchen ermittelt werden können, abhängig. Als Weichmacher verwendet werden insbesondere Phthalate, Benzoate und aromatische Öle. Als oberflächenaktive Stoffe verwendet werden insbesondere Fluorverbindungen, acetylenische Alkohole, und bevorzugt Silane wie z.B. Vinylsilane, Mercaptosilane und Aminosilane. Derartige oberflächenaktive Stoffe werden typischerweise in einem Anteil von maximal 0.1 Gew.%, insbesondere von maximal 0.05 Gew.% eingesetzt und wirken insbesondere auch als Entschäumer, wodurch die Adhäsion verbessert werden kann. Als Flammschutzmittel erhältlich und verwendet werden können bei Bedarf insbesondere aus dem einschlägigen Stand der Technik bekannte Phosphor- und Halogenverbindungen. Als Füllstoff verwendet werden bspw. Calciumcarbonat, Bariumsulfat, Silika, Talk, glass beads, organische und anorganische Fasern, Zeolithe und organische Polymerdispersionen. Im Rahmen der Erfindung können gängige Rheologiemodifikatoren und Thixotropiermittel verwendet werden, um die Handhabbarkeit und das Standvermögen der Klebstoffzusammensetzung zu beeinflussen. Als Stabilisatoren im Rahmen der Erfindung geeignet sind insbesondere Ethylacetoacetat, Isophoron sowie Dialkylmalonate wie z.B. Dimethylmalonat, Diethylmalonat, Methylethylmalonat, etc. Als Klebrigmacher können bei Bedarf insbesondere natürliche und synthetische Harze sowie organische Polymere bzw. Polymerdispersionen eingesetzt werden. Bei allen Zusatzstoffen ist, wie bei der Herstellung des Klebstoffsystems insgesamt, insbesondere der Komponente (A), auf weitgehendste Wasserfreiheit zu achten, um vorzeitige Abreaktion der freien Isocyanatgruppen zu verhindern. Diese Zuschlagstoffe sollen vorzugsweise jedoch einen Anteil von 15 Gew.-%, besonders bevorzugt 10 Gew.-% und ganz besonders bevorzugt 5 Gew.-% nicht überschreiten.

In weiteren Ausführungsformen der erfindungsgemässen Klebstoffsysteme umfasst die Komponente (B) als Katalysator einen oder mehrere Stoffe, welche ausgewählt sind aus der Gruppe der organischen Metallverbindungen wie z.B. die Zinn-organischen Verbindungen bestehend aus Carbonsäure-Zinnsalzen wie bspw. Zinnoctoat, Zinn-oleat, Zinn-acetat, Zinn-laurat; Dialkylzinn-Dicarboxylaten wie bspw. Dibutylzinn-Dilaurat sowie andere organische Metallverbindungen wie bspw. Alkylcarbonsäuresalze. Im weiteren können insbesondere tertiäre Amine wie bspw. 2,2-Dimorpholinodiethylether (DMDEE), N,N-Dimethyldiaminodiethylether, N,N'-Dimethylpiperazin, Triethylendiamin, und Mischungen davon in der Komponente (B) enthalten sein.
Ebenfalls können zusätzlich sogenannte "reaktive Katalysatoren", die entsprechende funktionelle Gruppen enthalten, z.B. Hydroxy- oder Aminogruppen in der Komponente (B) enthalten sein. Solche einbaufähigen Katalysatoren reagieren mit der Polymerkette der Komponente (A), so dass keine zusätzliche Geruchsbelästigung durch aminische Komponenten beim späteren Gebrauch auftreten können.. Dies sind zum Beispiel Dialkylaminoethanolamine, wie beispielsweise Dimethylaminoethanol. Durch den Einsatz verschiedener Katalysatoren ist es insbesondere möglich, das Verhältnis von "offener Zeit" zu "Presszeit" so zu steuern, dass letztere nicht übermässig lang wird.

Insbesondere ist es möglich, dass die Komponente (B) lediglich aus dem Katalysator besteht, ggf. mit üblichen Mitteln stabilisiert oder geträgert.

In einer weiteren bevorzugten Ausführungsform der Erfindung enthält die Komponente (B) neben dem zur Beschleunigung des Gesamtsystems notwendigen Katalysator weitere Komponenten, wie beispielsweise Lösungsmittel, insbesondere hochsiedende Lösungsmittel, um ein günstigeres Mischungsverhältnis der Komponenten (A) zu (B) einstellbar zu machen und/oder die Klebeigenschaften zu verbessern. Ein weiterer vorteilhafter Bestandteil der Komponente (B) sind insbesondere mit Isocyanatgruppen besonders reaktionsfähige Komponenten, wie beispielsweise Polyamine mit Molekulargewichten insbesondere bis zu 1000 g/Mol, die es erlauben im Augenblick der Mischung, bzw. kurz nach der Mischung von Komponente (A) mit Komponente (B) durch eine sehr schnelle Reaktion, eine "chemische Thixotropierung" des Gesamtsystems durch Ausbildung von Polyharnstoffen zu erreichen. Beispiele für solche Polyamine sind Isophorondiamin (IPDA) oder Diethyltoluylendiamin (DETDA). Mengen von 0,5 bis 3 % der insgesamt in der Komponente (A) zur Verfügung stehenden freien Isocyanatgruppen reichen in der Regel aus, um eine solche chemische Thixotropierung mit den niedermolekularen Polyaminen zu bewirken.

Ein weiterer Vorteil des beschriebenen Verfahrens durch Kombination der Komponenten (A) und (B) besteht darin, dass man mittels der Komponente (B) neben den bereits erwähnten Produkten weitere Isocyanat-reaktive Verbindungen in das Klebstoffsystem einbringen kann. Hier sind insbesondere Di- und Triole zu nennen, wie beispielsweise Ethylenglykol oder Glyzerin, Feuchtigkeit in Form von freiem Wasser oder in Form von beliebigen Polymerlatices, wie beispielsweise Acrylatdispersionen, Polyurethandispersionen oder Polyvinylacetatdispersionen. Diese Verfahrensvariante erfordert aber den sofortigen Einsatz der Mischung zum Verkleben der Holzsubstrate.

Gemäss der Erfindung sind in dem Klebstoffsystem als Komponente (B) verschiedene Katalysatoren als Alternativen und/oder verschiedene Katalysatormengen als Alternativen und/oder verschiedene Rheologiemodifikatoren als Alternativen und/oder verschiedene Rheologiemodifikatormengen als Alternativen enthalten. Wie vorstehend bereits ausgeführt, bieten sich verschiedenste Varianten der Bereitstellung der Komponente (B) an: So kann es sich beispielsweise um ein einziges Gefäss mit Komponente (B) (enthaltend einen Katalysator oder eine Mischung von Katalysatoren) handeln, aus welchem der Anwender in Abhängigkeit von der gewünschten offenen Zeit verschiedene Mengen zudosieren muss. Es können aber auch bspw. verschiedene Gefässe mit Komponente (B) vorgesehen sein, welche verschiedene zu erzielende offene Zeiten/Presszeiten repräsentieren, mit jeweils verschiedenen Katalysatoren, verschiedenen Katalysatorenmischungen und/oder verschiedenen Gehalten an Katalysator bzw. Katalysatormischung. So kann der Anwender durch die insbesondere immer gleiche zuzugebende Menge der Komponente (B), je nachdem, welches Gefäss er wählt, verschiedene offene Zeiten leicht einstellen.

Die Erfindung betriff weiter ein Verfahren zum Bereitstellen einer individuell an die Substrate und die Verarbeitungsbedingungen angepassten Klebstoffzusammensetzung, umfassend die Schritte:
- Bereitstellen eines vorstehend beschriebenen Klebstoffsystems;
- Auswählen einer für die jeweiligen Substrate und Anwendungsbedingungen geeigneten Komponente (B) aus mehreren Alternativen;
   und/oder
   Auswählen einer Menge einer Komponente (B), wobei diese Menge an die jeweiligen Substrate und Verarbeitungsbedingungen angepasst ist;
- Beimischung der Komponente (B) zur Komponente (A);

In besonders bevorzugten Ausführungsformen des vorstehend genannten Verfahrens wird die Komponente (B) zur Komponente (A) in einem Anteil von 0.1 Gew.% bis etwa 15 Gew.% beigemischt, vorzugsweise in einem Anteil von etwa 2 Gew.% bis etwa 10 Gew.%, besonders bevorzugt in einem Anteil von etwa 4 Gew.% bis etwa 6 Gew.%.

Die Mischung der Komponenten (A) mit der Komponente (B) erfolgt vorzugsweise unmittelbar vor dem Auftrag auf die Holzsubstrate durch ein Mischen der Komponente (B) in (A) mittels handelsüblichen Statisch- oder Dynamischmischern. Die aus dem Statisch- oder Dynamischmischer auslaufende Klebstoffmischung kann in Gebinden zwischengelagert werden, oder, was besonders bevorzugt wird, sofort als Klebstoffraupe auf die Substrate aufgebracht werden. Das letztere Verfahren erlaubt insbesondere das Einbringen von Feuchtigkeit, enthaltend in der Komponente (B) in Form von zugefügtem Wasser oder Mitverwendung von wässrigen Polymerlatices in das System, um hierdurch besondere Klebeffekte zu erreichen. Ebenso ist diese inline-Herstellung des Klebstoffs unmittelbar vor dem Auftrag auf die Substrate für die chemische Thixotropierung mit aliphatischen oder aromatischen Polyaminen hervorrragend geeignet. Ausgehend von leicht handhabbaren niederviskosen Komponenten (A) und (B) wird unmittelbar vor der Applikation ein Klebstoff erzeugt, der einstellbar bereits nach wenigen Sekunden bis Minuten eine standfeste Klebstoffraupe auf dem Substrat entstehen lässt, was nach der normalen Applikation des Klebstoffs auf die waagerecht liegenden Substrate deren senkrechte Anordnung zur Weiterverarbeitung erlaubt, ohne dass es zum Ablaufen des Klebstoffs kommt.

Es können aber auch Rühraggregate, insbesondere Dissolver, eingesetzt werden. Hierbei ist auf weitestgehenden Feuchtigkeitsausschluss zu achten. In diesem Fall werden Mengen gemischt, die einen Verbrauch über eine genau definierte Verarbeitungszeit repräsentieren. Bei größeren Ansatzmengen kann unter Umständen nicht mehr schnell genug auf die wechselnden Bedingungen vor Ort (Klima, Holzsorte, etc.) reagiert werden.

In weiteren, besonders bevorzugten Ausführungsformen ist es vorgesehen, dass die Beimischung der Komponente (B) zur Komponente (A) in einer derartigen Menge erfolgt, dass unter den jeweiligen Verarbeitungsbedingungen eine offene Zeit der Klebstoffzusammensetzung von etwa 2 Minuten bis etwa 180 Minuten resultiert, vorzugsweise von etwa 5 Minuten bis etwa 120 Minuten.

Die Erfindung betrifft weiter ein Verfahren zum Verbinden von Substraten, insbesondere mindestens eines Holzsubstrats, umfassend die folgenden Schritte:
- Bereitstellen einer Klebstoffzusammensetzung mittels eines Verfahrens, wie vorstehend ausgeführt, zum Bereitstellen einer individuell an die Substrate und die Verarbeitungsbedingungen angepassten Klebstoffzusammensetzung;
- Auftragen der Mischung auf mindestens eines der Substrate und Verbinden der Substrate.

Die Erfindung betrifft ferner die Verwendung einer separat bereitgestellten Modifizierungskomponente (B) zum individuellen, insbesondere an die jeweiligen Substrate und Verarbeitungsbedingungen angepassten Beschleunigen der Härtung und/oder der Rheologie eines einkomponentigen Polyurethan-Klebstoffsystems, insbesondere eines Klebstoffsystems wie vorstehend beschrieben.

Die Erfindung wird nachfolgend zum besseren Verständnis anhand von einigen derzeit bevorzugten Ausführungsbeispielen beschrieben.

### Beispiele für Komponente A

A1:

| | |
|---|---|
| Prepolymer auf Basis Rein-MDI und Polyetherpolyol (hier: Desmodur E23 von Bayer AG) (NCO-Gehalt ca. 16 %) | 45 Gew.% |
| Prepolymer auf Basis PMDI und Polyetherpolyol (hier: Desmodur E21 von Bayer); (NCO-Gehalt ca. 16 %) | 45 Gew.% |
| Pyrogene Kieselsäure (hier: Aerosil R 972 von Degussa) | 1 Gew.% |
| Calciumcarbonat gefällt (hier: Socal U1S2 von Solvay) | 5 Gew.% |
| Entschäumer (hier: Perenol E7 von Cognis) | 0.2 Gew.% |
| Lösemittel (hier: Diisobutylnaphthalin) | 3.8 Gew.% |

A2:

| | |
|---|---|
| Prepolymer auf Basis MDI/PMDI und Polyetherpolyol (hier: Desmodur 38IF04 von Bayer); (NCO-Gehalt ca. 15 %) | 50 Gew.% |
| Prepolymer auf Basis Rein-MDI und Polyetherpolyol (hier: Desmodur E23 von Bayer AG) (NCO-Gehalt ca. 16 %) | 39.6 Gew.% |
| Aliphatisches Isocyanat (hier: Desmodur N 3300) | 0.85 Gew.% |
| Kreide (hier: Millicarb von Omya) | 8 Gew.% |
| Pyrogene Kieselsäure (hier: Aerosil R 202 von Degussa) | 1.4 Gew.% |
| Entschäumer (hier: Perenol E1 von Cognis) | 0.15 Gew.% |

A3:

| | |
|---|---|
| Prepolymer auf Basis Rein-MDI und Polyetherpolyol (hier: Desmodur E23 von Bayer AG) | 90 Gew.% |
| PMDI (hier: Desmodur VK 10)(NCO-Gehalt ca. 31,5 %) | 5 Gew.% |
| Pyrogene Kieselsäure (hier: Aerosil R 972 von Degussa) | 2 Gew.% |
| Lösemittel (hier: Diethylmalonat) | 2.8 Gew.% |
| Entschäumer (hier: Perenol E7 von Cognis) | 0.2 Gew.% |

### Beispiele für Komponente B

### Beispiele nur mit Katalysator und Lösungsmittel:

| | B1* | B2 | B3 | B4 | B5 | B6 |
|---|---|---|---|---|---|---|
| Dibasic Ester (hier: Diisobutyl DBE von DuPont) | 100 | 90 | 80 | 70 | 60 | 50 |
| | Gew.% | Gew.% | Gew.% | Gew.% | Gew.% | Gew.% |
| Dimorpholinodiethylether (DMDEE) | 0 | 10 | 20 | 30 | 40 | 50 |
| | Gew.% | Gew.% | Gew.% | Gew.% | Gew.% | Gew.% |

| | | | | | | |
|---|---|---|---|---|---|---|
| *nicht erfindungsgemäss | | | | | | |

### Beispiele mit Katalysator, Lösungsmittel und Thixotropierungsmittel:

| | B7* | B8 | B9 | B10 | B11 | B12 |
|---|---|---|---|---|---|---|
| DBE (Dibasic Ester) | 50 | 40 | 30 | 20 | 10 | 0 |
| | Gew.% | Gew.% | Gew.% | Gew.% | Gew.% | Gew.% |
| Isophorondiamin | 50 | 50 | 50 | 50 | 50 | 50 |
| | Gew.% | Gew.% | Gew.% | Gew.% | Gew.% | Gew.% |
| Dimethylaminoethanol | 0 | 10 | 20 | 30 | 40 | 50 |
| | Gew.% | Gew.% | Gew.% | Gew.% | Gew.% | Gew.% |

| | | | | | | |
|---|---|---|---|---|---|---|
| *nicht erfindungsgemäss | | | | | | |

### Beispiele mit Katalysator, Lösungsmittel und niedermolekularem Polyol:

| | B13 | B14 | B15 | B16 | B17 | B18 |
|---|---|---|---|---|---|---|
| Diisobutylnaphthalin | 50 | 40 | 30 | 20 | 10 | 0 |
| | Gew.% | Gew.% | Gew.% | Gew.% | Gew.% | Gew.% |
| Triisopropanolamin | 50 | 50 | 50 | 50 | 50 | 50 |
| | Gew.% | Gew.% | Gew.% | Gew.% | Gew.% | Gew.% |
| Triethylendiamin | 0 | 10 | 20 | 30 | 40 | 50 |
| | Gew.% | Gew.% | Gew.% | Gew.% | Gew.% | Gew.% |

Die Kombinationen der Komponenten A und B ergaben beispielsweise folgende "Offenen Zeiten", welche die Vorteile des erfindungsgemässen Klebstoffsystems belegen:

| Komponente A | Komponente B | Mischverhältnis | Offene Zeit |
|---|---|---|---|
| A1 | ---* | --- | 80 Minuten |
| A1 | B2 | A:B = 95:5 | 13 Minuten |
| A1 | B9 | A:B = 95:5 | 5 Minuten |
| A1 | B16 | A:B = 95:5 | 5 Minuten |
| A2 | ---* | --- | 70 Minuten |
| A2 | B3 | A:B = 95:5 | 10 Minuten |
| A2 | B10 | A:B = 95:5 | 8 Minuten |
| A2 | B17 | A:B = 95:5 | 4 Minuten |
| A3 | ---* | --- | 90 Minuten |
| A3 | B4 | A:B = 95:5 | 7 Minuten |
| A3 | B11 | A:B = 95:5 | 9 Minuten |
| A3 | B18 | A:B = 95:5 | 3 Minuten |

| | | | |
|---|---|---|---|
| *nicht erfindungsgemäss | | | |

## Patentansprüche

1. Klebstoffsystem, umfassend als separate Komponenten:
(A) eine mit Feuchtigkeit.reaktionsfähige Mischung, umfassend mindestens ein Prepolymer, aufgebaut aus mindestens einem Polyol und mindestens einem Polyisocyanat; sowie
(B) eine Modifizierungskomponente, umfassend mindestens einen Polymerisationskatalysator,
**dadurch gekennzeichnet, dass** als Komponente (B) verschiedene Katalysatoren als Alternativen und/oder verschiedene Katalysatormengen als Alternativen und/oder verschiedene Rheologiemodifikatoren als Alternativen und/oder verschiedene Rheologiemodifikatormengen als Alternativen enthalten sind.

2. Klebstoffsystem gemäß Anspruch 1, **dadurch gekennzeichnet, dass** ein aromatisches Polyisocyanat der Komponente (A) beigefügt und/oder beim Aufbau des Prepolymeren verwendet ist.

3. Klebstoffsystem gemäß Anspruch 2, **dadurch gekennzeichnet, dass** das aromatische Polyisocyanat ausgewählt ist aus der Gruppe bestehend aus Diphenylmethan-Diisocyanaten (MDI) und Toluol-Diisocyanaten sowie Mischungen davon.

4. Klebstoffsystem gemäss einem der Ansprüche 2 bis 3, **dadurch gekennzeichnet, dass** es sich bei dem aromatischen Polyisocyanat um 4,4'- und/oder 2,4'-Methylendiphenylisocyanat, mit Anteilen an polymeren Methylenbis (phenylisocyanaten) (PMDI), handelt.

5. Klebstoffsystem gemäss einem der Ansprüche 1 bis 4, **dadurch gekennzeichnet, dass** ein aliphatisches Polyisocyanat der Komponente (A) beigefügt und/oder beim Aufbau des Prepolymeren verwendet ist.

6. Klebstoffsystem gemäss Anspruch 5, **dadurch gekennzeichnet, dass** es sich bei dem aliphatischen Polyisocyanat um ein Polyisocyanat auf der Basis von Isophoron-Diisocyanat, Hexamethylen-Diisocyanat, bis(4-Isocyanatocyclohexyl)methan oder um Mischungen davon handelt.

7. Klebstoffsystem gemäss einem der Ansprüche 1 bis 6, **dadurch gekennzeichnet, dass** ein Polyester-Polyol und/oder ein Polyether-Polyol der Komponente (A), beigefügt ist und/oder und/oder beim Aufbau des Prepolymeren verwendet ist.

8. Klebstoffsystem gemäss Anspruch **dadurch gekennzeichnet, dass**
- der Polyester-Polyol und/oder der Polyether-Polyol ein mittleres Molekulargewicht im Bereich von 300 g/mol bis 6000 g/mol aufweist; und/oder
- die mittlere Hydroxylzahl des Polyester-Polyols und/oder des Polyether-Polyols 20 bis 250 beträgt.

9. Klebstoffsystem gemäss einem der Ansprüche 1 bis 8, **dadurch gekennzeichnet, dass** das Polyurethan-Prepolymer einen mittleren Isocyanatgehalt von 10 Gew.% bis 20 Gew.% aufweist, vorzugsweise von 12 Gew.% bis 18 Gew.%, besonders bevorzugt von 14 Gew.% bis 17 Gew.-%.

10. Klebstoffsystem gemäss einem der Ansprüche 1 bis 9, **dadurch gekennzeichnet, dass** die Komponente (B) als Katalysator einen Stoff umfasst, ausgewählt aus der Gruppe der organischen Metall-, insbesondere Zinnverbindungen, tertiären Aminen und Mischungen davon.

11. Klebstoffsystem gemäss Anspruch 10, **dadurch gekennzeichnet, dass** die Komponente (B) lediglich aus dem Katalysator besteht.

12. Klebstoffsystem gemäss einem der Ansprüche 1 bis 10, **dadurch gekennzeichnet, dass** die Komponente (B) mindestens einen Rheologiemodifikator und/oder eine Isocyanat reaktive Komponente, insbesondere ein niedermolekulares Polyamin, insbesondere mit einem Molekulargewicht von ≤ 1000 g/mol, umfasst.

13. Klebstoffsystem gemäss einem der Ansprüche 1 bis 12, weiter umfassend in Komponente (A) einen oder mehrere Zusatzstoffe enthält, ausgewählt aus der Gruppe bestehend aus Weichmachern, oberflächenaktiven Stoffen, Flammschutzmitteln, Füllstoffen, Farbstoffen, Pigmenten, Lösungsmitten, Entschäumern, Thixotropiermitteln, Stabilisatoren und Klebrigmachern.

14. Verfahren zum Bereitstellen einer individuell an die Substrate und die Verarbeitungsbedingungen angepassten Klebstoffzusammensetzung, umfassend die Schritte:
- Bereitstellen eines Klebstoffsystems gemäss einem der Ansprüche 1 bis 13;
- Auswählen einer für die jeweiligen Substrate und Anwendungsbedingungen geeigneten Komponente (B) aus mehreren Alternativen;
und/oder
Auswählen einer Menge einer Komponente (B), wobei diese Menge an die jeweiligen Substrate und Verarbeitungsbedingungen angepasst ist;
- Beimischung der Komponente (B) zur Komponente (A)_{.}

15. Verfahren gemäss Anspruch 14, **dadurch gekennzeichnet, dass** die Komponente (B) zur Komponente (A) in einem Anteil von 0,2 Gew.% bis 15 Gew.% beigemischt wird, vorzugsweise in einem Anteil von 2 Gew.% bis 10 Gew.%, besonders bevorzugt in einem Anteil von 4 Gew.% bis 6 Gew.%.

16. Verfahren gemäss einem der Ansprüche 14 oder 15, **dadurch gekennzeichnet, dass** die Beimischung der Komponente (B) zur Komponente (A) in einer derartigen Menge erfolgt, dass unter den jeweiligen Verarbeitungsbedingungen eine offene Zeit der Klebstoffzusammensetzung von 2 Minuten bis 180 Minuten resultiert, vorzugsweise von 5 Minuten bis 120 Minuten.

17. Verfahren zum Verbinden von Substraten, insbesondere mindestens eines Holzsubstrats, umfassend die folgenden Schritte:
- Bereitstellen einer Klebstoffzusammensetzung mittels eines Verfahrens gemäss einem der Ansprüche 14 bis 16;
- Auftragen der Mischung auf mindestens eines der Substrate und Verbinden der Substrate.

18. Verwendung einer separat bereitgestellten Modifizierungkomponente zum individuellen, insbesondere an die jeweilig gen Substrate und Verarbeitungsbedingungen angepassten Beschleunigen der Härtung und/oder der Rheologie eines einkomponentigen Polyurethan-Klebstoffsystems gemäss einem der Ansprüche 1 bis 13.

## Claims

1. Adhesive system comprising as separate components:
(A) a moisture-reactive mixture comprising at least one prepolymer composed of at least one polyol and at least one polyisocyanate; and also
(B) a modifying component comprising at least one polymerization catalyst,
**characterized in that**, as component (B), various catalysts as alternatives and/or various catalyst amounts as alternatives and/or various rheology modifiers as alternatives and/or various rheology modifier amounts as alternatives are present.

2. Adhesive system according to Claim 1, **characterized in that** an aromatic polyisocyanate is added to component (A) and/or is used in the composition of the prepolymer.

3. Adhesive system according to Claim 2, **characterized in that** the aromatic polyisocyanate is selected from the group consisting of diphenylmethane diisocyanates (MDI) and toluene diisocyanates as well as mixtures thereof.

4. Adhesive system according to anyone of Claims 2 or 3, **characterized in that** the aromatic polyisocyanate is 4,4'- and/or 2,4'-methylenediphenylisocyanate, with fractions of polymeric methylenebis(phenylisocyanates) (PMDI).

5. Adhesive system according to any one of Claims 1 to 4, **characterized in that** an aliphatic polyisocyanate is added to component (A) and/or is used in the composition of the prepolymer.

6. Adhesive system according to Claim 5, **characterized in that** the aliphatic polyisocyanate is a polyisocyanate based on isophorone diisocyanate, hexamethylene diisocyanate, bis(4-isocyanatocyclohexyl)methane or mixtures thereof.

7. Adhesive system according to any one of Claims 1 to 6, **characterized in that** a polyester polyol and/or a polyether polyol is added to component (A) and/or is used in the composition of the prepolymer.

8. Adhesive system according to Claim 7, **characterized in that**
- the polyester polyol and/or the polyether polyol has an average molecular weight in the range from 300 g/mol to 6000 g/mol; and/or
- the average hydroxyl number of the polyester polyol and/or of the polyether polyol is 20 to 250.

9. Adhesive system according to any one of Claims 1 to 8, **characterized in that** the polyurethane prepolymer has an average isocyanate content of 10% to 20% by weight, preferably of 12% to 18% by weight, more preferably of 14% to 17% by weight.

10. Adhesive system according to any one of Claims 1 to 9, **characterized in that** component (B) comprises as catalyst a substance selected from the group of organic metal compounds, more particularly tin compounds, tertiary amines and mixtures thereof.

11. Adhesive system according to Claim 10, **characterized in that** component (B) is composed solely of the catalyst.

12. Adhesive system according to any one of Claims 1 to 10, **characterized in that** component (B) comprises at least one rheology modifier and/or one isocyanate-reactive component, particularly a low molecular weight polyamine, more particularly having a molecular weight of ≤ 1000 g/mol.

13. Adhesive system according to any one of Claims 1 to 12, further comprising in component (A) one or more additives selected from the group consisting of plasticizers, surface-active substances, flame retardants, fillers, dyes, pigments, solvents, defoamers, thixotropic agents, stabilizers and tackifiers.

14. Method of providing an adhesive composition adapted individually to the substrates and to the processing conditions, comprising the steps of:
- providing an adhesive system according to any one of Claims 1 to 13;
- selecting, from a plurality of alternatives, a component (B) suitable for the particular substrates and application conditions;
and/or
selecting an amount of a component (B), this amount being adapted to the particular substrates and processing conditions;
- admixing component (B) to component (A).

15. Method according to Claim 14, **characterized in that** component (B) is admixed to component (A) in a fraction of 0.2% to 15% by weight, preferably in a fraction of 2% to 10% by weight, more preferably in a fraction of 4% to 6% by weight.

16. Method according to either of Claims 14 and 15, **characterized in that** the admixing of component (B) to component (A) takes place in an amount such that, under the particular processing conditions, the adhesive composition has a resulting open time of 2 minutes to 180 minutes, preferably of 5 minutes to 120 minutes.

17. Method of joining substrates, more particularly at least one wood substrate, comprising the following steps:
- providing an adhesive composition by means of a method according to any one of Claims 14 to 16;
- applying the mixture to at least one of the substrates and joining the substrates.

18. Use of a separately provided modifying component for the individual acceleration, adapted more particularly to the particular substrates and processing conditions, of the curing and/or of the rheology of a one-component polyurethane adhesive system according to any one of Claims 1 to 13.

## Revendications

1. Système adhésif, comprenant, sous forme de composants séparés :
(A) un mélange apte à la réaction avec de l'humidité, comprenant au moins un prépolymère, formé à partir d'au moins un polyol et d'au moins un polyisocyanate ; et
(B) un composant de modification comprenant au moins un catalyseur de polymérisation,
**caractérisé en ce qu'**il contient, comme composant (B), différents catalyseurs comme variantes et/ou différentes quantités de catalyseur comme variantes et/ou différents modificateurs de rhéologie comme variantes et/ou différentes quantités de modificateurs de rhéologie comme variantes.

2. Système adhésif selon la revendication 1, **caractérisé en ce qu'**un polyisocyanate aromatique est ajouté au composant (A) et/ou est utilisé lors de la formation du prépolymère.

3. Système adhésif selon la revendication 2, **caractérisé en ce que** le polyisocyanate aromatique est choisi dans le groupe constitué par les diphénylméthane-diisocyanates (MDI) et les toluène-diisocyanates ainsi que leurs mélanges.

4. Système adhésif selon l'une quelconque des revendications 2 à 3, **caractérisé en ce qu'**il s'agit, pour le polyisocyanate aromatique, du 4,4'-méthylènediphénylisocyanate et/ou du 2,4'-méthylènediphénylisocyanate, avec des proportions de méthylènebis(phénylisocyanates) polymères (PMDI).

5. Système adhésif selon l'une quelconque des revendications 1 à 4, **caractérisé en ce qu'**un polyisocyanate aliphatique est ajouté au composant (A) et/ou est utilisé lors de la formation du prépolymère.

6. Système adhésif selon la revendication 5, **caractérisé en ce qu'**il s'agit pour le polyisocyanate aliphatique d'un polyisocyanate à base d'isophorone-diisocyanate, d'hexaméthylène-diisocyanate, de bis(4-isocyanatocyclohexyl)méthane ou de leurs mélanges.

7. Système adhésif selon l'une quelconque des revendications 1 à 6, **caractérisé en ce qu'**un polyester-polyol et/ou un polyéther-polyol sont ajoutés au composant (A) et/ou sont utilisés lors de la formation du prépolymère.

8. Système adhésif selon la revendication 7, **caractérisé en ce que**
- le polyester-polyol et/ou le polyéther-polyol présentent un poids moléculaire moyen dans la région de 300 g/mole à 6000 g/mole ; et/ou
- l'indice d'hydroxyle moyen du polyester-polyol et/ou du polyéther-polyol est de 20 à 250.

9. Système adhésif selon l'une quelconque des revendications 1 à 8, **caractérisé en ce que** le prépolymère de polyuréthane présente une teneur moyenne en isocyanate de 10% en poids à 20% en poids, de préférence de 12% en poids à 18% en poids, de manière particulièrement préférée de 14% en poids à 17% en poids.

10. Système adhésif selon l'une quelconque des revendications 1 à 9, **caractérisé en ce que** le composant (B) comprend, comme catalyseur, une substance choisie dans le groupe des composés organiques métalliques, en particulier stanniques, des amines tertiaires et de leurs mélanges.

11. Système adhésif selon la revendication 10, **caractérisé en ce que** le composant (B) est uniquement constitué du catalyseur.

12. Système adhésif selon l'une quelconque des revendications 1 à 10, **caractérisé en ce que** le composant (B) comprend au moins un modificateur de rhéologie et/ou un composant réactif avec isocyanate, en particulier une polyamine de bas poids moléculaire, en particulier avec un poids moléculaire de ≤ 1000 g/mole.

13. Système adhésif selon l'une quelconque des revendications 1 à 12, comprenant en outre, dans le composant (A), un ou plusieurs additifs, choisis dans le groupe constitué par les plastifiants, les substances tensioactives, les agents ignifuges, les charges, des colorants, les pigments, les solvants, les antimousses, les agents thixotropiques, les stabilisateurs et les agents poisseux.

14. Procédé pour la préparation d'une composition adhésive adaptée individuellement aux substrats et aux conditions de transformation, comprenant les étapes de :
- préparation d'un système adhésif selon l'une quelconque des revendications 1 à 13 ;
- choix d'un composant (B) approprié pour les différents substrats et conditions d'utilisation parmi plusieurs variantes ;
et/ou
choix d'une quantité d'un composant (B), cette quantité étant adaptée aux différents substrats et conditions de transformation ;
- mélange du composant (B) dans le composant (A).

15. Procédé selon la revendication 14, **caractérisé en ce que** le composant (B) est mélangé dans le composant (A) en une proportion de 0,2% en poids à 15% en poids, de préférence en une proportion de 2% en poids à 10% en poids, de manière particulièrement préférée en une proportion de 4% en poids à 6% en poids.

16. Procédé selon l'une quelconque des revendications 14 ou 15, **caractérisé en ce que** le mélange du composant (B) au composant (A) est réalisé en une quantité telle qu'on obtient, dans les conditions de transformation, un temps ouvert de la composition adhésive de 2 minutes à 180 minutes, de préférence de 5 minutes à 120 minutes.

17. Procédé pour assembler des substrats, en particulier au moins un substrat en bois, comprenant les étapes suivantes :
- préparation d'une composition adhésive au moyen d'un procédé selon l'une quelconque des revendications 14 à 16 ;
- application du mélange sur au moins un des substrats et assemblage des substrats.

18. Utilisation d'un composant de modification préparé séparément pour l'accélération individuelle du durcissement et/ou de la rhéologie, en particulier adaptée aux différents substrats et conditions de transformation, d'un système adhésif à base de polyuréthane à un composant selon l'une quelconque des revendications 1 à 13.
